# EUROPÄISCHE PATENTSCHRIFT

(11) **EP 0 468 084 B1**
(45) Veröffentlichungstag und Bekanntmachung des Hinweises auf die Patenterteilung: **24.11.1993**
(21) Anmeldenummer: 90117829.3
(22) Anmeldetag: 17.09.1990
(51) Int. Cl.: F01L 1/34

(54) **Vorrichtung zum Spannen und Verstellen eines Nockenwellenkettentriebes**
Device for tensioning and displacing a camshaft chain drive
Dispositif pour tendre et déplacer un entraînement d'arbre à cames par chaîne

(30) Priorität: 26.07.1990 DE 4023727
(43) Veröffentlichungstag der Anmeldung: 29.01.1992
(73) Patentinhaber: Dr.Ing.h.c. F. Porsche Aktiengesellschaft, 70435 Stuttgart (DE); HYDRAULIK-RING GMBH, D-72622 Nürtingen (DE)
(72) Erfinder: Trzmiel, Alfred, Dipl.-Ing. (FH), D-7441 Grafenberg (DE); Fiedler, Olaf, Dipl.-Ing. (FH), D-7530 Pforzheim (DE); Weyandt, Johannes, D-7132 Illingen (DE)

(56) Entgegenhaltungen:
- EP-A- 0 305 716
- EP-A- 0 445 356
- DE-A- 3 534 446
- FR-A- 2 565 627
- US-A- 2 159 017
- US-A- 4 862 845

## Beschreibung

Die Erfindung betrifft eine Vorrichtung zum Spannen und Verstellen eines Nockenwellenkettentriebes nach dem Oberbegriff des Anspruchs 1.

Eine derartige Vorrichtung ist aus FR-A-2 565 627 bekannt. An einem Kettentrieb, mit dem eine Nockenwelle eines Hubkolbenmotors eine zweite Nockenwelle antreibt, ist zum Spannen und Verstellen ein Hydraulikkolben angeordnet, dessen beide Spannschuhe an den beiden Kettentrums anliegen. Wird durch Druckbeaufschlagung mit Hydraulikdruck der Hydraulikkolben quer zur Bewegungsrichtung des Kettentriebes verschoben, so wird durch Verkürzen des einen Kettentrums und entsprechendes Verlängern des anderen Kettentrums die relative Drehlage der Nockenwellen zueinander geändert.

Aus US-A-2 159 017 ist es bekannt, bei einer dem gleichen Zweck dienenden Verstellvorrichtung zum Verstellen Motoröldruck zu verwenden, der mit der Motordrehzahl steigt.

In der EP-A-0 445 356, die unter Artikel 54(3) EPÜ fällt, ist eine hydraulische Spanneinrichtung für eine die beiden Nockenwellen einer Brennkraftmaschine umschlingenden Kette, bestehend aus zwei konzentrisch ineinandergeführten Hydraulikkolben beschrieben. Eine zentrisch zwischen den Hydraulikkolben angeordnete Feder verschiebt die Hydraulikkolben gegenläufig zueinander und legt die an ihren Enden befestigten Spannschuhe an die Kette an. Durch Beaufschlagen eines Hydraulikkolbens mit Hydraulikdruck wird die Spannvorrichtung quer zur Kette verschoben, so daß sich durch Verkürzen des Lostrums und Verlängern des Lasttrums die relative Drehlage der Einlaßnockenwelle geändert und so die Steuerzeit der Einlaßventile verändert wird. Zur Steuerung des Hydraulikdrucks dient ein Regelschieber, der mittels eines Elektromagnets längsverschieblich ist und Druckzuführkanäle zur Spanneinrichtung steuert.

Es ist die Aufgabe der Erfindung, eine gattungsgemäße Spann- und Verstellvorrichtung so weiterzubilden, daß sie einfacher und kostengünstiger herstellbar wird.

Zur Lösung dieser Aufgabe dienen die Merkmale des Anspruchs 1. Der Motoröldruck liegt an einem durch eine Feder verspannten, in einer Gehäusebohrung längsbeweglichen Steuerglied an, von dem ein Kanal zu dem Hydraulikkolben führt. Mit wachsendem Motoröldruck wird das Steuerglied immer weiter verschoben, bis es den Kanal zum Hydraulikkolben freigibt. Ab hier wirkt dann der volle Öldruck auf den Hydraulikkolben und verschiebt ihn in die maximale Verstellage. Wird der Motoröldruck wieder abgesenkt, so geht der Hydraulikkolben in die Ausgangslage zurück. Wie Versuche gezeigt haben, läßt sich mit dieser einfachen 2-Punkt-Regelung das Motordrehmoment im unteren Drehzahlbereich beträchtlich steigern und auch die Leistung erhöhen.

Die erfindungsgemäße Spann- und Verstellvorrichtung ist in der Zeichnung dargestellt und wird nachfolgend erläutert.

Es zeigen:

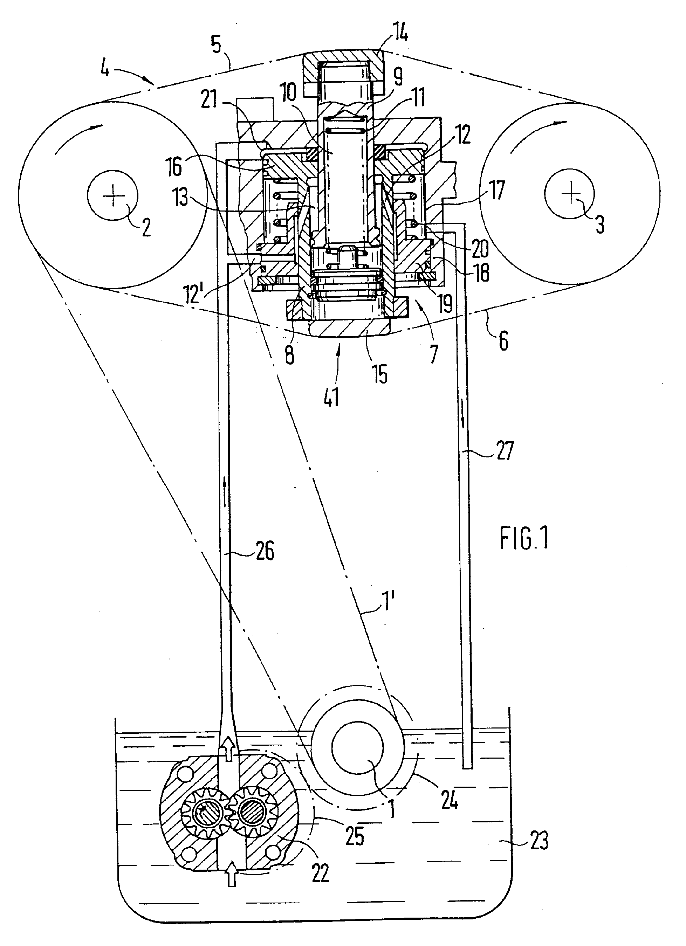

- Fig. 1: schematische Darstellung eines Nockenwellenantriebs mit einer Spann- und Verstellvorrichtung,
- Fig. 2: Steuergehäuse mit Steuerschieber,
- Fig. 3: Kraft-Weg-Diagramm zu Fig. 2,
- Fig. 4: Druck- Drehzahl- Diagramm
- Fig. 5: Verdrehwinkel- Drehzahl- Diagramm
- Fig. 6: Steuerschieber mit Tellerfeder,
- Fig. 7: Kraft-Weg-Diagramm zu Fig. 6,
- Fig. 8: Druck- Drehzahl- Diagramm zu Fig. 6,
- Fig. 9: Verdrehwinkel- Drehzahl- Diagramm zu Fig. 6,
- Fig. 10: Kugelumschaltventil.

Von einer Kurbelwelle 1 einer Brennkraftmaschine ist mit einem Zahnriemen 1' oder einer Kette eine die Auslaßventile betätigende Auslaßnockenwelle 2 angetrieben. Die Auslaßnockenwelle 2 treibt mit einer Kette 4 eine die Einlaßventile steuernde Einlaßnockenwelle 3 an. Am Lasttrum 5 und Lostrum 6 der Kette 4 greift von der Ketteninnenseite her eine hydraulische Spannvorrichtung 7 an.

Die Spannvorrichtung 7 besteht aus einem hohlen äußeren Hydraulikkolben 8, einem in ihm längsgeführten inneren, ebenfalls hohlen Hydraulikkolben 9 und einer in dem Hohlraum 10 zwischen den beiden Hydraulikkolben 8, 9 verspannten Schrauben-Druckfeder 11. Zusätzlich zur Kraft der Schrauben-Druckfeder 11 sind die Hydraulikkolben 8, 9 über einen Druckanschluß 12 an einem Ringraum 13 zwischen den beiden Hydraulikkolben 8, 9 mit Hydraulikdruck beaufschlagt, der über den an den Schmierölkreislauf des Motors angeschlossenen Kanal 12' zugeführt wird. Am inneren Hydraulikkolben 9 ist ein Spannschuh 14 befestigt, der am Lasttrum 5 der Kette 4 angreift. Ein endseitig im äußeren Hydraulikkolben 8 befestigter Spannschuh 15 drückt auf das Lostrum 6 der Kette 4. Am anderen Ende ist der äußere Hydraulikkolben 8 mit einem Bund 16 versehen, der in einer Bohrung 17 des Gehäuses 18 abgedichtet längsgeführt ist.

Zwischen dem Bund 16 und einer im Gehäuse 18 befestigten Führungshülse 19 ist eine Schrauben- Druckfeder 20 verspannt. Stirnseitig am Bund 16 des Hydraulikkolben 8 liegt ein zweiter Druckanschluß 21, über den Motoröldruck auf die Spannvorrichtung 7 gegeben wird. Bei Anderung des Motoröldrucks wird die Spannvorrichtung 7 insgesamt quer zum Lasttrum 5 und Lostrum 6 so verschoben, daß das Lostrum verkürzt und das Lasttrum verlängert wird oder umgekehrt. Auf diese Weise wird zur Anderung der Ventilsteuerzeiten die Einlaßnockenwelle 3 gegenüber der Auslaßnockenwelle verdreht.

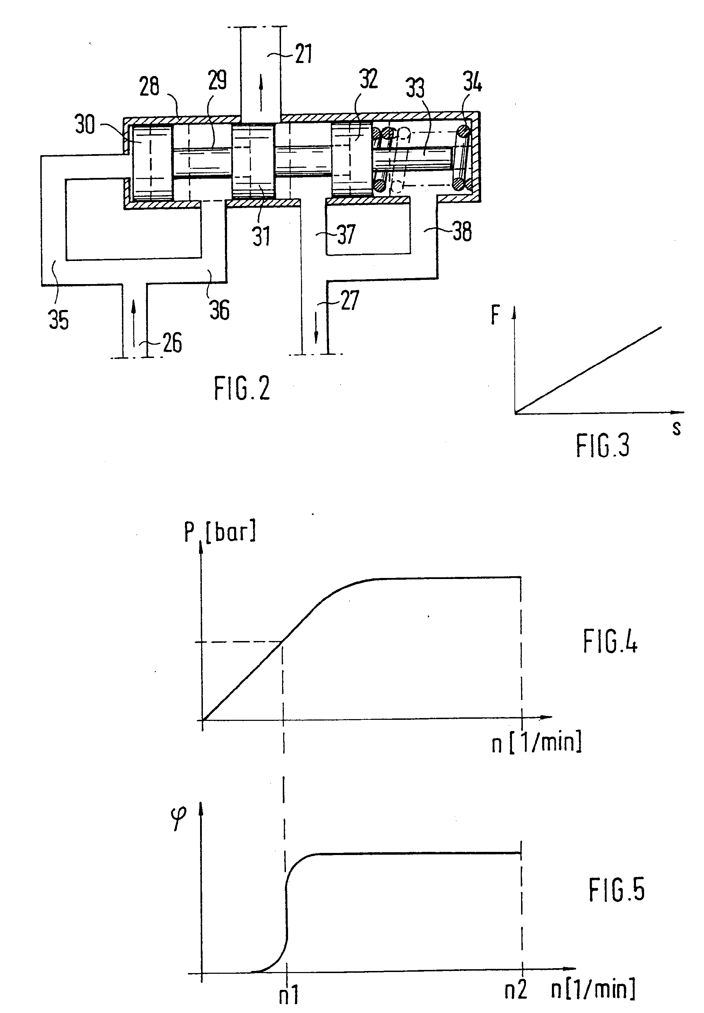

Der Motoröldruck wird durch eine Zahnradpumpe 22 erzeugt, die in der Motorölwanne 23 angeordnet ist und von der Kurbelwelle 1 über ein Stirnradpaar 24, 25 angetrieben wird. Die Zahnradpumpe 22 ist über eine Druckleitung 26 mit dem zum Spannen dienenden Kanal 12' bzw. ersten Druckanschluß 12 sowie mit dem zweiten Druckanschluß 21 verbunden, über den die Nockenwellenverstellung erfolgt. Mit zunehmender Drehzahl der Kurbelwelle 1 erzeugt die gegen den Hydraulikkolben 8 fördernde Zahnradpumpe 22 einen entsprechend ansteigenden Öldruck, so daß der Hydraulikkolben 8 und somit die gesamte Spannvorrichtung 7 verschoben wird. Das zugehörige Kraft- Weg- Diagramm ist in Fig. 3 dargestellt, wobei F die Federkraft, s den Federweg bezeichnet. Da derselbe Öldruck über den Druckanschluß 12 auch auf die Rückseite des Hydraulikkolbens wirkt, bleibt bei der Verstellung die Spannung der Kette in voller Höhe erhalten. In einer Rücklaufleitung 27 wird Öl aus der Verstellvorrichtung in die Ölwanne 23 zurückgeleitet.

In Fig. 2 ist ein Steuerschieber dargestellt. Die von der Zahnradpumpe 22 ausgehende Druckleitung 26 ist an ein Steuergehäuse 28 angeschlossen, in dem ein Steuerschieber 29 langsbeweglich geführt ist.

Der Steuerschieber 29 weist einen stirnseitigen Kolben 30, einen mittleren Steuerkolben 31 sowie einen Führungskolben 32 auf, wobei alle drei Kolben 30, 31, 32 starr miteinander verbunden sind. An dem Führungskolben 32 ist stirnseitig ein Stift 33 angebracht, der in eine zwischen dem Führungskolben 32 und dem Steuergehäuse 28 verspannte Schraubenfeder 34 hineinragt.

Die Druckleitung 26 verzweigt sich zum Steuergehäuse 28 hin in eine den Kolben 30 stirnseitig beaufschlagende Leitung 35 und eine zur Rückseite des Kolbens 30 führende Leitung 36. Von den beiden Stirnseiten des Führungskolbens 32 gehen Rückleitungen 37 und 38 ab, die sich in der gemeinsamen Rücklaufleitung 27 vereinigen.

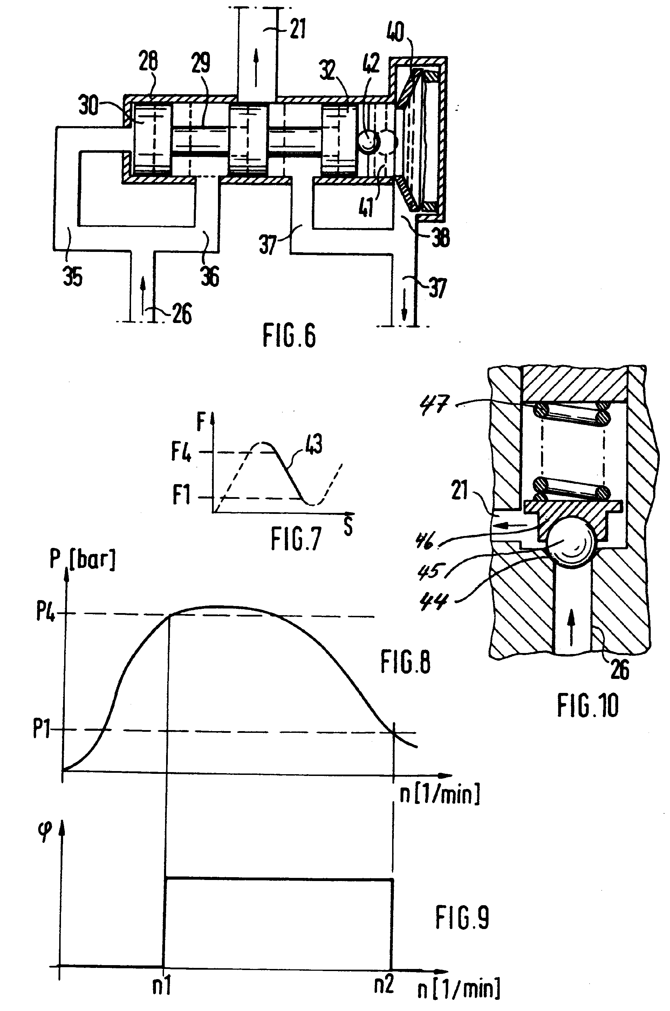

Mit dem mittleren Steuerkolben 31 wird der zum Verstellen der Spannvorrichtung 7 dienende Kanal 21 gesteuert. Der über die Druckleitung 26 zugeführte Öldruck verschiebt den Steuerschieber 29 unter weiterem Verspannen der Schraubenfeder 34, bis der Steuerkolben 31 den Kanal 21 freigibt und in der gestrichelt gezeichneten Stellung der Stift 33 am Steuergehäuse 28 zur Anlage kommt. Wie Fig. 4 zeigt, steigt der auf die Spannvorrichtung 7 wirkende Druck p mit der Motordrehzahl n kontinuierlich an und wird bei weiterer Erhöhung der Motordrehzahl auf einer konstanten Höhe gehalten. Bei der Drehzahl nl wird eine Verbindung geschaffen, zwischen der Leitung 36 und dem Kanal 21 und der volle Öldruck wirkt auf den Hydraulikkolben 8. Wie Fig. 5 zeigt, ändert sich hierbei der Verdrehwinkel φ der Einlaßnockenwelle 3 sprunghaft.

Bei der in Fig. 6 dargestellten Ausführungsform der Erfindung ist der Steuerschieber 29 durch eine Tellerfeder 40, ein Druckstück 41 und eine am Führungskolben 32 anliegende Kugel 42 am Steuergehäuse 28 abgestützt. Das zugehörige Kraft- Weg-Diagramm der Tellerfeder 40 zeigt Fig. 7. Von dieser Kurve wird das linear abfallende Kurvenstück 43 zur Steuerung verwendet. Dem oberen Umschaltpunkt bei der Kraft F4 entspricht in Fig. 8 ein Druck von ca. 4 bar, dem unteren Umschaltpunkt bei F1 entspricht ein Druck von ca. 1 bar. Bei Druckanstieg wird zunächst der obere Umschaltpunkt erreicht. Da die Tellerfeder 40 auf dem negativ abfallenden Kurvenstück 43 arbeitet, bleibt dieser Schaltzustand erhalten, bis der Druck unterhalb 1 bar abgesenkt ist. Man erhält so eine definierte 2-Punkt-Schaltung, für den Verdrehwinkel φ der Einlaßnockenwelle 3. Wie Fig. 9 zeigt, ist das zugehörige Schaltdiagramm für den Verdrehwinkel φ infolge des Kippeffektes der Tellerfeder exakt rechteckig.

Anstelle eines Steuerschiebers kann auch ein Kugelumschaltventil verwendet werden, wie es in Fig. 10 dargestellt ist. Dabei ist in der Druckleitung 26 ein Ventilsitz 44 ausgebildet, an den eine Kugel 45 über ein Druckstück 46 mit einer sich am Steuergehäuse abstützenden Schraubenfeder 47 angedrückt ist. Ab einem bestimmten Öldruck in der Druckleitung 26 hebt die Kugel 45 vom Ventilsitz 44 ab und gibt den Weg zu dem Kanal 21 frei, über den die Spannvorrichtung 7 mit dem vollem Öldruck beaufschlagt wird.

## Patentansprüche

1. Vorrichtung zum hydraulischen Spannen und Verstellen eines Umschlingungstriebes, der als Kette (4) ausgebildet ist, mit der eine Nockenwelle (2) eines Hubkolbenmotors eine zweite Nockenwelle (3) antreibt, wobei durch Verstellen der Kette (4) mit einem Hydraulikkolben (8) die relative Drehlage der Nockenwellen (2, 3) zueinander dadurch geändert wird, daß eine Ketten-Spanneinrichtung quer zur Kette (4) verschoben wird, wobei sich das Lostrum (6) der Kette (4) verlängert und das Lasttrum (5) verkürzt oder das Lostrum (6) verkürzt und das Lasttrum (5) verlängert dadurch gekennzeichnet, daß als Hydraulikflüssigkeit Motoröl verwendet wird, dessen Druck mit der Motordrehzahl ansteigt, und daß der Druck des Motoröls auf ein unter Federspannung stehendes Steuerglied (29) einwirkt, das entsprechend der Motordrehzahl kontinuierlich verschoben wird und ab einer festlegbaren Motordrehzahl einen Kanal (21) zum Druckbeaufschlagen des Hydraulikkolbens (8) mit Motoröldruck freigibt.

2. Vorrichtung nach Anspruch 1, **dadurch gekennzeichnet,** daß als Steuerglied (29) ein durch eine Schraubenfeder (34) vorgespannter, in einem Steuergehäuse (28) längsgeführter Steuerschieber (29) dient.

3. Vorrichtung nach Anspruch 1, **dadurch gekennzeichnet,** daß als Steuerglied ein Kugelsitzventil dient, das durch eine Feder (47) in Schließlage gehalten ist und nach Öffnen durch den Motoröldruck einen Kanal (21) zum Hydraulikkolben (8) freigibt.

4. Vorrichtung nach Anspruch 1 und 2, **dadurch gekennzeichnet,** daß der Steuerschieber (29) durch eine Tellerfeder (40) abgestützt ist, wobei deren negativ abfallendes Kurvenstück (43 in Fig. 7) zur Steuerung benutzt wird.

## Claims

1. A device for hydraulically tensioning and displacing a belt drive constructed in the form of a chain (4) by which a camshaft (2) of a reciprocating-piston engine drives a second camshaft (3), the relative rotational position of the camshafts (2, 3) to each other being altered by displacement of the chain (4) by an hydraulic piston (8) as a result of the fact that a chain-tensioning device is displaced transversely to the chain (4), the slack strand (6) of the chain (4) being lengthened and the loaded strand (5) shortened or the slack strand (6) being shortened and the loaded strand (5) lengthened, **characterized** **in that** engine oil is used as hydraulic fluid, the pressure of the engine oil increasing with the engine speed, and the pressure of the engine oil acts upon a control member (29) stressed by a spring and continuously displaced in accordance with the engine speed and, above a settable engine speed, opening a duct (21) for acting upon the hydraulic piston with engine-oil pressure.

2. A device according to Claim 1, **characterized in that** a control slide (29) pre-stressed by a helical spring (34) and guided longitudinally in a control casing (28) acts as the control member (29).

3. A device according to Claim 1, **characterized in that** a ball-seat valve acts as the control member, the ball-seat valve being held in the closed position by a spring (47) and opening a duct (21) to the hydraulic piston (8) after being opened by the engine-oil pressure.

4. A device according to Claims 1 and 2, **characterized in that** the control slide (29) is supported by a dished spring (40), the negatively falling curved section thereof (43 in Fig. 7) being used for control purposes.

## Revendications

1. Dispositif pour tendre et déplacer hydrauliquement une transmission en boucle, conçue sous la forme d'une chaîne (4), par laquelle un arbre à cames (2) d'un moteur à piston alternatif entraîne un second arbre à cames (3), dans lequel par déplacement de la chaîne (4) avec un piston hydraulique (8), la position de rotation relative des arbres à cames (2, 3) l'un par rapport à l'autre est modifiée par le fait qu'un dispositif de tension de chaîne est déplacé transversalement à la chaîne (4), dans lequel le brin libre (6) de la chaîne (4) est allongé et le brin en charge (5) est raccourci ou le brin libre (6) est raccourci et le brin en charge (5) est allongé, caractérisé en ce qu'on utilise comme liquide hydraulique l'huile du moteur dont la pression augmente avec la vitesse de rotation du moteur et en ce que la pression de l'huile du moteur agit sur un organe de commande (29) soumis à la tension d'un ressort, lequel organe est déplacé en continu suivant la vitesse de rotation du moteur et libère un canal (21), à partir d'une vitesse de rotation du moteur à définir, pour que le piston hydraulique (8) soit soumis à la pression de l'huile du moteur.

2. Dispositif selon la revendication 1, caractérisé en ce qu'on utilise comme organe de commande (29) un coulisseau de commande (29) précontraint par un ressort hélicoïdal (34), guidé longitudinalement dans un boîtier de commande (28).

3. Dispositif selon la revendication 1, caractérisé en ce qu'on utilise comme organe de commande un clapet à bille qui est maintenu en position fermée par un ressort (47) et qui après ouverture par la pression de l'huile du moteur, libère un canal (21) menant au piston hydraulique (8).

4. Dispositif selon les revendications 1 et 2, caractérisé en ce que le coulisseau de commande (29) est soutenu par un ressort Belleville (40), sa portion de courbe (43) sur la figure (7) descendant négativement, étant utilisée pour la commande.
